# EUROPÄISCHE PATENTANMELDUNG

(11) **EP 2 084 967 A1**
(43) Veröffentlichungstag der Anmeldung: **05.08.2009**
(21) Anmeldenummer: 08450008.1
(22) Anmeldetag: 24.01.2008
(51) Int. Cl.: A01N 47/44, A01P 1/00

(54) **Verfahren zur Bekämpfung unerwünschter Mikroorganismen an Bananenpflanzen**

(71) Anmelder: Aka Central Research Laboratories GmbH, 1210 Wien (AT)
(72) Erfinder: Schmidt, Oskar, 1030 Wien (AT); Pasberg-Gauhl, Cornelia c/o Tafrilico S.A., San José (CR)
(74) Vertreter: Schwarz, Albin

(57) **Zusammenfassung**

Verfahren zur Bekämpfung unerwünschter Mikroorganismen an Bananenpflanzen oder Verfahren zum Schutz von Bananenpflanzen gegen den Befall durch unerwünschte Mikroorganismen durch Einbringen polymerer Guanidinium-Derivate in das Rhizom einer Bananenpflanze unter Anwendung eines Druckes

## Beschreibung

Bananen und Kochbananen sind die wichtigsten landwirtschaftlichen Produkte in den Tropen. Auf geschätzten 9 Millionen ha werden mehr als 100 Millionen Tonnen dieser Früchte jährlich produziert, wovon ein Anteil im Wert von 5 Billionen USD auf internationalen Märkten umgesetzt wird. Besonders in Lateinamerika und im tropischen Afiika stellen die (Koch)Bananen die wichtigste Lebensmittelgrundlage da, z.B. in Ländern wie Ruanda oder Uganda werden pro Tag und Person bis zu einem Kilogramm dieser Früchte verzehrt.

Krankheiten verursachen die grössten Verluste in der Bananenproduktion. Die Fusarium-Welke der Banane wird weithin als die schädlichste aller Pflanzenkrankeiten der Geschichte angesehen. Sie wird verursacht durch den bodenbürtigen Pilz *Fusarium oxysporum* Schlecht *forma specialis cubense* (E.F. Smith) Snyd. & Hans (Foc), der durch die Wurzeln eindringt und das Gefässsystem der Pflanzen befällt. Inokulationsversuche von Rasse 1 auf Bananenpflanzen der Sorte ,Gros Michel' zeigen folgenden Infektionsverlauf:
Natürlicherweise dringt der Pilz über die Wurzelspitzen in das Parenchym- und
Xylemgewebe ein. Chlamydosporen (Dauersporen) keimen bei der Anwesenheit von Exudaten, die aus Gewebe anschliessend an die Wurzelwachstumszone ausgeschieden werden. In befallenen Xylemsträngen werden grosse Mengen an Mikrokonidien gebildet, die mit dem Transpirationsflux des Xylemwassers akropetal verbreitet werden und über leiterförmige Gewebe benachbarte Xylemstränge befallen können. Nach 2-3 Tagen kann ein ganzer Xylemstrang befallen sein. In Form der Chlamydosporen kann der Pilz über lange Zeit im Boden überdauern.

Diese Krankheit wurde 1874 zum ersten Mal in Australien beschrieben und 1890 in Panama und Costa Rica entdeckt. Die Fusarium-Welke wird auch Panama-Krankeit genannt, in Erinnerung an den grossen Schaden, den diese Krankheit in mittelamerikanischen ExportBananenplantagen anrichtete. Zwischen 1900 und 1960 wurden 40,000 ha ,Gros Michel'-Bananen (AAA) zerstört, was damals einem finanziellen Verlust von ungefähr 400 Millionen USD entsprach (geschätzte 2.3 Billionen USD im Jahr 2000). Die Entdeckung der Focresistenten Sorten der Cavendish-Gruppe (AAA) liessen den kollabierten Bananenexport in Lateinamerika wieder aufleben. Heutzutage ist die Panama-Krankheit, mit Ausnahme weniger Länder im Südpazifik und im Mittelmeerraum, in allen Bananenanbaugebieten der Welt verbreitet.

Die Fusarium-Welke befällt viele verschiedene Bananensorten, wobei ,Gros Michel' die Basis der ersten Exportbananenplantagen in Lateinamerika und in der Karibik war. Je nachdem, welche Bananensorten von bestimmten Foc-Isolaten befallen werden können, ordnet man sie vier verschiedenen Foc-Rassen zu:
Rasse 1 befällt hauptsächlich ,Gros Michel' (AAA) und Kochbananen der ,Silk' und ,Pome'-Sorten (AAB).
Rasse 2 befällt Kochbananen, besonders aber ,Bluggoe' (ABB), verschiedene Hybriden und
*Ensete,* welche eine wichtige Nahrungsquelle für 8 Millionen Ethiopier darstellt. Rasse 3 befällt hauptsächlich Heliconien und ist nur wenig oder gar nicht pathogen für Bananen. Rasse 4 befällt alle Cavendish-Sorten und alle Bananen, die auch von Rasse 1 und 2 befallen werden können. Rasse 4 wird in zwei Unterrassen eingeteilt. Die tropische Rasse 4 schädigt die Cavendish-Bananen unter tropischen Verhältnissen und unterscheidet sich genetisch eindeutig von der subtropischen Rasse 4.

Obwohl in der westlichen Hemisphäre Cavendish-Sorten noch ohne Foc-Probleme angebaut werden können, gibt es bereits Probleme in Südafrika, Australien und Asien. Die Krankheit breitet sich besonders in Asien schnell aus. Bis jetzt hat man sie in Malaysia, Indonesien, Neu Guinea, Vietnam, Myanmar, Philippinen, China und Taiwan entdeckt Seit 1989 führen Foc-Rasse-4-Ausbrüche, vor allem in südostasiatischen Cavendish-Pflanzungen, zu erheblichen Verlusten. Allein in Malaysia und Indonesien zerstörte die Krankheit innnerhalb von fünf Jahren acht Millionen Pflanzen im Wert von 75 Millionen USD jährlich. In indonesischen Plantagen hat man nach der Entdeckung von Befallsherden bis zu 55 Neuinfektinen pro ha und Monat gezählt. In den Philippinen wurden zwischen 1974 und 1991 mehr als 30 Millionen Pflanzen von Foc befallen

Chemische Bekämpfungsansätze der Panama-Krankheit, Kontrolle durch Überflutung oder Rotation mit anderen Kulturpflanzen blieben alle ohne dauerhaften Erfolg. Die aktuelle Globalisierung und der Entwicklungsfortschritt in vielen tropischen Ländern erhöhen die Gefahr der Verschleppung in andere Regionen erheblich. Würde Foc tropische Rasse 4 aus den jetzt bekannten Infektionsherden ausbrechen, würde der potentielle Schaden grösser sein als der, den Rasse 1 an ,Gros Michel' zwischen 1900 und 1960 verursacht hat. In Lateinamerika und der Karibik ist der Bananenanbau eine wichtige Einnahmequelle. Der aktuelle Exportbananenanbau basiert zu 100% auf den Cavendish-Sorten. Eine Einschleppung der Rasse 4 in diese Region würde katastrophale Auswirkungen auf die Wirtschaft, das Sozialgefüge und die Lebensmittelversorgung in diesen Länder haben.

Zusammenfassend kann gesagt werden, dass die Panama-Krankeit in den Tropen seit 1960 bis jetzt durch die Umstellung der Pflanzungen von ,Gros Michel' auf die Cavendish-Sorten keine grosse Rolle mehr gespielt hatte. Aber mit dem Auftauchen der tropischen Rasse 4 in Südostasien änderte sich dieses Bild dramatisch. Die Cavendish-Monokulturen in den Exportbananen-Plantagen sind wieder der Gefahr ausgesetzt, durch die Panama-Krankheit zerstört zu werden. Ausserdem sind verschiedene Kochbananen und zahlreiche andere Dessert-Bananen von dieser Gefahr bedroht. Foc tropische Rasse 4 gefährdet 80% der weltweiten Bananenproduktion. Es ist dringend notwendig, die Krankheitsausbreitung zu überwachen und strikte Quarantäne-massnahmen zu treffen. Ausserdem besteht weiterhin der dringende Bedarf nach wirksamen chemischen direkten Bekämpfungsmethoden.

Es wurde nun überraschenderweise ein Verfahren gefunden, das die Bekämpfung unerwünschter Mikroorganismen an Bananenpflanzen besonders effektiv gestaltet.

In einem Aspekt stellt die vorliegende Erfindung
- ein Verfahren zur Bekämpfung unerwünschter Mikroorganismen an Bananenpflanzen,
- ein Verfahren zum Schutz von Bananenpflanzen gegen den Befall durch unerwünschte Mikroorganismen,
   zur Verfügung, das dadurch gekennzeichnet ist, dass in das Gefäßsystem einer Bananenpflanze polymere Guanidinium-Derivate auf Basis eines Diamins unter Anwendung eines Druckes eingebracht werden, wobei das Diamin Oxyalkylenketten und/oder Alkylengruppen zwischen zwei Aminogruppen enthält und wobei das Guanidinium-Derivat durch Polykondensation eines Guanidin-Säureadditionssalzes mit dem Diamin erhältlich ist,
wobei ein Polykondensationsprodukt in Salzform erhalten wird, welches gegebenenfalls anschließend, z.B. durch basischen Anionenaustausch, in die Hydroxidform überführt wird.

In einem anderen Aspekt stellt die vorliegende Erfindung die Verwendung von polymeren Guanidinium-Derivaten auf Basis eines Diamins zum Einbringen in das Gefäßsystem von Bananenpflanzen unter Anwendung eines Druckes zur Bekämpfung unerwünschter Mikroorganismen an Bananenpflanzen und gegen den Befall durch unerwünschte Mikroorganismen, zur Verfügung,
wobei das Diamin Oxyalkylenketten und/oder Alkylengruppen zwischen zwei Aminogruppen enthält und wobei das Guanidinium-Derivat durch Polykondensation eines Guanidin-Säureadditionssalzes mit dem Diamin erhältlich ist, wobei ein Polykondensationsprodukt in Salzform erhalten wird, welches gegebenenfalls anschließend, z.B. durch basischen Anionenaustausch, in die Hydroxidform überführt wird.

Die polymeren Guanidinium-Derivate können über das Rhizom, den Stamm, z.B. durch Anbohren, oder über die Wurzel der Bananenpflanze, in ihr Gefäßsystem eingebracht werden. Bei der Einbringung über die Wurzel ist zu beachten, dass das polymere Guanidinium-Derivat möglichst wenig mit dem Erdreich in Berührung kommt. Die Anwendung einer Guanidinium-Derivat-hältigen Lösung in einer Phiole, in welche ein Wurzelast der Bananenpflanze gesteckt ist, ist daher vorzuziehen. Es hat sich gezeigt, dass das Guanidinium-Derivat in der Pflanze abgebaut wird.

Als Bananenpflanzen, die gemäss vorliegender Erfindung behandelt werden können, können jegliche Bananenpflanzen verwendet werden, insbesondere der Gattungen ,Musa' und ,Ensete', die Obst- oder Kochbananen hervorbringen, wie beispielsweise Bananenpflanzen der Handelssorten ,Gros Michel' (AAA), der ,Cavendish'-Gruppe (AAA); oder verschiedene Hybriden, wie Sorten der (AAB) Gruppen ,Silk', ,Pome', ,Manzano'; Kochbananen der Sorten ,Bluggoe' (ABB) oder Pisang Awak.

Unerwünschte Mikroorganismen die gemäss vorliegender Erfindung bekämpft werden können, schliessen Pilze, Bakterien und Viren ein, insbesonders Pilze, bevorzugt Pilze, die die Fusarium-Welke der Banane (Panama Krankheit) hervorrufen können, z.B. Pilze der Gattung *Fusarium oxysporum,* wie *Fusarium oxysporum forma specialis cubense* (E.F. Smith) Snyd. & Hans (Foc).

Polymere Guanidinium-Derivate auf Basis eines Diamins, welches Oxyalkylenketten und/oder Alkylengruppen zwischen zwei Aminogruppen enthält, wobei das Guanidinium-Derivat durch Polykondensation eines Guanidin-Säureadditionssalzes mit dem Diamin erhältlich ist, wobei ein Polykondensationsprodukt in Salzform erhalten wird, welches gegebenenfalls anschließend, z.B. durch basischen Anionenaustausch in die Hydroxidform überführt wird, werden in der vorliegenden Anmeldung auch als "erfindungsgemäß verwendbare Guanidinium-Derivate" bezeichnet.

Biozide Polymere auf der Basis von Guanidinium-Hydrochlorid, insbesondere deren Wirkung gegen *Escherichia coli*-Bakterien sind bereits bekannt (vgl. WO 01/85676). Weiterhin ist bereits bekannt, dass solche Guanidin-Derivate als fungizide Mittel verwendet werden können (vgl. WO 2006/047800). Von besonderer Bedeutung sind die Polymere Akacid^{®}, das Poly-[2-(2-ethoxy)-ethoxyethyl-guanidiniumchlorid], und Akacid plus^{®}, eine 3:1-Mischung aus Poly-(hexamethylenguanidiniumchlorid) und Poly-[2-(2-ethoxy)-ethoxyethyl)-guanidiniumchlorid] (vgl. Antibiotika Monitor, 22. Jahrgang, Heft 1/2/2006, Online-Ausgabe unter
http://www.antibiotikamonitor.at/06_12/06_12_inhalt.htm).

Die erfindungsgemäß verwendbaren Guanidinium-Derivate basieren auf einem Diamin, welches Oxyalkylenketten und/oder Alkylengruppen zwischen zwei Aminogruppen enthält, wobei das Guanidinium-Derivat durch Polykondensation eines Guanidin-Säureadditionssalzes mit dem Diamin, erhältlich ist, wobei ein Polykondensationsprodukt in Salzform erhalten wird, welches gegebenenfalls anschließend, z.B. durch basischen Anionenaustausch, in die Hydroxidform übergeführt wird.

Bevorzugte Guanidinium-Derivate schliessen Salze, wie das Guanidinium-Hydrochlorid, und Guanidinium-Hydroxide, besonders bevorzugt Guanidinium-Hydroxide ein.

Eine bevorzugte Ausführungsform des erfindungsgemäß verwendbaren Guanidinium-Derivates besteht darin, dass als Vertreter der Reihe der Polyoxyalkylen-Guanidin-Salze solche unter Einsatz von Triethylenglykoldiamin (relative Molekularmasse: 148), von Polyoxypropylendiamin (relative Molekularmasse: 230) sowie von Polyoxyethylendiamin (relative Molekularmasse: 600), oder auch von Polyhexamethylendiamin (relative Molekularmasse: 1.500) erhalten werden.

Eine weitere bevorzugte Ausführungsform des erfindungsgemäß verwendbaren Guanidinium-Derivates ist dadurch gekennzeichnet, dass als das polymere Guanidin-Derivat Poly-[2-(2-ethoxy-ethoxyethyl)-guanidinium-hydroxid] mit mindestens 3 Guanidinium-Resten enthalten ist.

Weiterhin bevorzugt verwendbar sind Guanidinium-Derivate, bei denen das Polykondensationsprodukt in Salzform durch Polykondensation eines Guanidin-Säureadditionssalzes mit einem Alkylendiamin und einem Oxyalkylendiamin im Molverhältnis zwischen 4:1 und 1:4 (Alkylendiamin/Oxyalkylendiamin), bevorzugt zwischen 3:1 und 1:3, erhältlich ist.

Bevorzugt ist als Diamin ein Alkylendiamin der allgemeinen Formel

H₂N-(CH₂)ₙ-NH₂

vorgesehen ist, in welcher n eine ganze Zahl zwischen 2 und 10, insbesondere 6, ist.

Weiterhin bevorzugt ist als Oxyalkylendiamin eine Verbindung der allgemeinen Formel

H₂N-(CH₂)₂O)]ₘ-(CH₂)₂-NH₂

vorgesehen, in welcher m eine ganze Zahl zwischen 2 und 5, insbesondere 2, ist.

Die mittlere Molekularmasse des erfindungsgemäß verwendbaren Guanidinium-Derivates liegt bevorzugt im Bereich 500 bis 3.000, besonders bevorzugt im Bereich 500 bis 2.000, ganz besonders bevorzugt im Bereich 500 bis 1.500. Weiterhin bevorzugt ist eine mittlere Molekularmasse von 1000.

Erfindungsgemäß verwendbare Guanidinium-Derivate, insbesondere die Hydrochloride, sind bekannt (vgl. WO 01/85676).

Beispielsweise erhält man das erfindungsgemäß verwendbare Guanidinium-Derivat, z.B. das Hydroxid Poly-[2-(2-ethoxy-ethoxyethyl)-guanidinium-hydroxid] mit einer mittleren Molekularmasse von etwa 1000, indem man 4,43 Mol Guanidinium-Hydrochlorid in 4,03 Mol Triethylenglykoldiamin bei 50°C löst. Anschließend erwärmt man auf 120°C und rührt 2 Stunden bei dieser Temperatur. Danach wird die Temperatur 2 Stunden gehalten, dann ein Vakuum (0,1 bar) angelegt und 2 weitere Stunden unter Vakuum bei 170°C gerührt. Anschließend wird auf Normaldruck belüftet, auf 120°C abkühlen gelassen und mit entmineralisiertem Wasser auf ca. 50 % verdünnt. Mit Phosphorsäure wird auf einen pH-Wert von ca. 6 neutralisiert, abkühlen gelassen und auf die gewünschte Konzentration verdünnt. Anschließend wird die Hydroxid-Form hergestellt, indem die zuvor erhaltene Lösung mit einem stark alkalischen Anionenaustauscher in Hydroxid-Form behandelt wird, zweckmäßigerweise in einer Austauschersäule (z.B. "Ambersep 900 OH" oder "Lewatit MP 500"). So erhält man ein erfindungsgemäß verwendbare
Guanidinium-Hydroxid mit folgenden Charakteristika: Summenformel: C₂₁H₅₁N₉O₅ bzw. 49,5 % Kohlenstoff, 10 % Wasserstoff, 24,8 % Stickstoff und 15,7 % Sauerstoff.

"Einbringen unter Anwendung eines Druckes" gemäss vorliegender Erfindung bedeutet, dass die erfindungsgemäß verwendbaren Guanidinium-Derivate in das Rhizom der Pflanze unter Anwendung eines Druckes eingebracht werden, der den Druck, der bei einer einfachen Infiltration ohne Druckanwendung, z.B. jenen, der bei Benutzung einer Pasteur-Pipette, entsteht, übersteigt. Es hat sich überraschenderweise herausgestellt, dass ein leichter Spritzdruck zur Bekämpfung von schädlichen Mikroorganismen in der Bananenpflanze bereits ausreichend ist, während die Behandlung ohne Druckanwendung, z.B. bei Verwendung einer Pasteur-Pipette überraschenderweise keine oder nur wenig entsprechende Wirkung zeigt.
Zur Erzeugung eines solchen Druckes können gängige Spritzen verwendet werden, z.B. in der Human- oder Veterinärmedizin übliche Einmalspritzen, oder Infiltrationsflaschen, die in einer Höhe befestigt werden, die die Erzeugung eines, zumindest leichten, Druckes garantieren. Das Einbringen unter Anwendung eines Druckes kann in geeigneter Weise auch maschinell erfolgen.

Die erfindungsgemäß verwendbaren Guanidinium-Derivate liegen beim Einspritzen gelöst in einem Lösungsmittel vor. Die Konzentration der erfindungsgemäß verwendbaren
Guanidinium-Hydroxide im Lösungsmittel beträgt 0.01 % oder mehr, z.B. 0.01 % bis 10%, wie 0.1% bis 5%, z.B. 0.1% bis 1 %, bevorzugt 0.1% bis 0.5%, z.B. 0.2% oder 0.3%. Als Lösungsmittel wird bevorzugt ein wässriges Lösungsmittel verwendet, z.B. Wasser, oder eine wässrige Lösung, z.B. ein wässriger Puffer, besonders bevorzugt Wasser.

Die Aufwandmenge der erfindungsgemäßen Guanidinium-Derivate pro Rhizom und Woche beträgt im allgemeinen 0.0001 g bis 0.1 g, bevorzugt 0.0005 g bis 0.01 g, z.B. 0.001 g bis 0.005 g.

In einer bevorzugten Ausführungsform wird in das Rhizom einer Bananenpflanze die wöchentliche Aufwandmenge des erfindungsgemäß verwendbaren Guanidinium-Derivates mit Hilfe einer Spritze eingespritzt, die im Rhizom verbleibt und die, je nach Verbrauch der Aufwandmenge, wieder aufgefüllt wird.
In einer anderen bevorzugten Ausführungsform wird in einer geeigneten Höhe über der Bananenpflanze, die garantiert, dass ein, zumindest leichter, Druck auf das Rhizom ausgeübt wird, eine Infiltrationsvorrichtung angebracht, wie sie z.B. in Spitälern zur Infusion von Flüssigkeiten verwendet wird, beispielsweise eine Tropfflasche, oder ein Tropfbeutel, die das erfindungsgemäße Guanidinium-Derivat enthält und die mit dem Rhizom der Bananenpflanze verbunden wird. Diese bevorzugte Ausführungsform wurde in Feldversuchen getestet und hat sich in Feldversuchen bewährt, wobei eine langfristige Versorgung des Rhizoms mit dem erfindungsgemäß verwendbaren Guanidinium-Derivat gewährleistet werden konnte.

Zur Einbringung des Guanidinium-Derivates in das Rhizom kann zuerst ein Loch in das Rhizom gebohrt werden, z.B. mit Hilfe einer Pasteur-Pipette oder einer Kanüle, und der Bohrkern entfernt werden. In das erhaltene Bohrloch kann dann die Zuführung für das Einbringen des Guanidinium-Derivates eingesetzt werden. Für ein Rhizom mit einem Durchmesser von etwa 3 cm kann das Bohrloch ungefähr 1.5 cm tief sein.
Die Zuführung wird wöchentlich auf Verstopfungen kontrolliert.

Das Einbringen der erfindungsgemäß verwendbaren Guanidinium-Hydroxide in das Rhizom der Bananenpflanze kann an gesunden Bananenpflanzen zum Schutz vor den Befall durch unerwünschte Mikroorganismen vorgenommen werde, oder an kranken Pflanzen zur Heilung von Krankheiten, die durch Mikroorganismen hervorgerufen werden.

### Testsystem

### Anzucht

Etwa 5cm grosse Bananenpflanzen werden in Pflanzsubstrat im Gewächshaus bei Umgebungstemperatur (15°C - 27°C) und natürlichem tropischen Tag-Nachtrhytmus unter ausreichendem Giessen und ausreichender Düngung angezogen. Nach etwa 90 Tagen erfolgt die Inokulation der Pflanzen.

### Inokulum

Foc-Isolat STGM 1 der Rasse 1, VCG 0120, aus Costa Rica wird in geeigneten Gefässen, z.B. Petrischalen zweimal auf Kartoffel-Dextrose-Agar überimpft. Die Petrischalen werden in einem Inkubator bei 25°C in einem 12h/12h Tag-Nachtrhytmus 14 Tage lang inkubiert, bis sich ein gut sporulierender Pilzrasen gebildet hat.
Die Oberflächen der Pilzrasen werden mit einem Skalpell in destilliertem Wasser vorsichtig abgekratzt. Die sich daraus ergebende Suspension wird durch eine doppelte Lage Gaze filtriert und auf 5x10⁵ Konidien / mL Wasser eingestellt (siehe z.B. auch Mak C. et al., "Early screening technique for Fusarium wilt resistance in banana micro propagated plants", in: Banana improvement; Cellular, molecular biology and induced mutations - Jain, S.M. (ed.) and R. Swennen (ed.). Proceedings from a meeting, Leuven, Belgium, September 24 - 28, 2001, Science Publishers, Enfield, USA. pp. 219-227, 2004).

### Inokulation

Für die Inokulation werden die Wurzelballen von 90 Tage alten Bananenpflanzen mit einem Wasserstrahl von der anhaftenden Erde befreit, die Wurzeln werden auf eine Länge von 5-6 cm zurückgeschnitten und eine Minute lang in die Konidiensuspension (5x10⁵ Konidien / mL Wasser, Inokulum) getaucht. Die derart behandelten Pflanzen werden anschliessend wieder in die Töpfe zurückgepflanzt.

### Pflanzenbehandlung

In das Rhizom (Durchmesser ungefähr 3cm) der Bananenpflanze werden mit Hilfe einer Pasteur-Pipette oder einer Kanüle (Durchmesser von 0.9 mm) ungefähr 1.5 cm tiefe Löcher gebohrt und die Bohrkerne entfernt. Anschliessend werden entweder Pipetten (z.B. Pasteur-Pipetten), oder Kanülen (z.B. in der Human- oder Veterinärmedizin üblichen Einmalspritzen, 5mL), jeweils eine pro Pflanze, in die Bohrlöcher eingeführt. Danach werden die Pipetten oder Spritzen mit 2 mL bis 5 mL Testlösung, oder mit destilliertem Wasser gefüllt.
Die Pipetten sind am oberen Ende offen, um den freien Fluss der Flüssigkeiten zu gewährleisten. Mit den Spritzen wird unter leichtem Druck 1 mL bis 2 mL der Testlösung oder destilliertes Wasser in die Rhizome gespritzt.

Die Behandlung findet einmal 1, 5 oder 12 Tage vor der Foc-Inokulation statt. Nach der Inokulation werden alle Pipetten und Spritzen einen Tag nach der Inokulation und dann wöchentlich auf Verstopfungen kontrolliert. Die Rhizome werden im wöchentlichen Abstand entweder mit Pipetten oder mit Spritzen, gefüllt entweder mit destilliertem Wasser oder mit Testlösung, behandelt. Die Pipetten oder die Spritzen werden in den Rhizomen stecken gelassen und nach Bedarf wieder aufgefüllt.

### Testlösung

Die Testlösung besteht entweder aus einer 3%igen Lösung einer 3:1-Mischung aus Poly-(hexamethylenguanidinium-hydroxid) und Poly-[2-(2-ethoxy-ethoxyethyl)-guanidinium-hydroxid] (Testlösung A) in Wasser, oder aus einer 3%igen Lösung einer 3:1-Mischung aus Poly-(hexamethylenguanidiniumchlorid) und Poly-[2-(2-ethoxy)-ethoxyethyl)-guanidiniumchlorid (Testlösung B) in Wasser.

Für die Pflanzenbehandlung wird jeweils die 3%ige Stammlösung mit destilliertem Wasser auf 0.3% verdünnt. Die Aufbewahrung der Testslösung erfolgte bei Umgebungstemperatur (20-25°C).

### Evaluierung der Foc-Symptome

Die Pflanzensymptome werden nach dem Erscheinen der ersten Blattsymptome
(Blattsymptom-Index) wöchentlich evaluiert. Die Rhizomdaten (Rhizomverfärbungs-Index) werden am Ende des Versuches erhoben (siehe z.B. Mak et al., ibidem).
Die ersten Blattverfärbungen treten im allgemeinen nach etwa fünf Wochen auf und werden nach 5, 6, 7, 8 und 9 Wochen nach Inokulation (dpi) evaluiert. Die Rhizomsymptome werden einmal nach 9 Wochen evaluiert, wobei die Rhizome aufgeschnitten und die Pflanzen zerstört werden.

### Beschreibung der Zeichnung

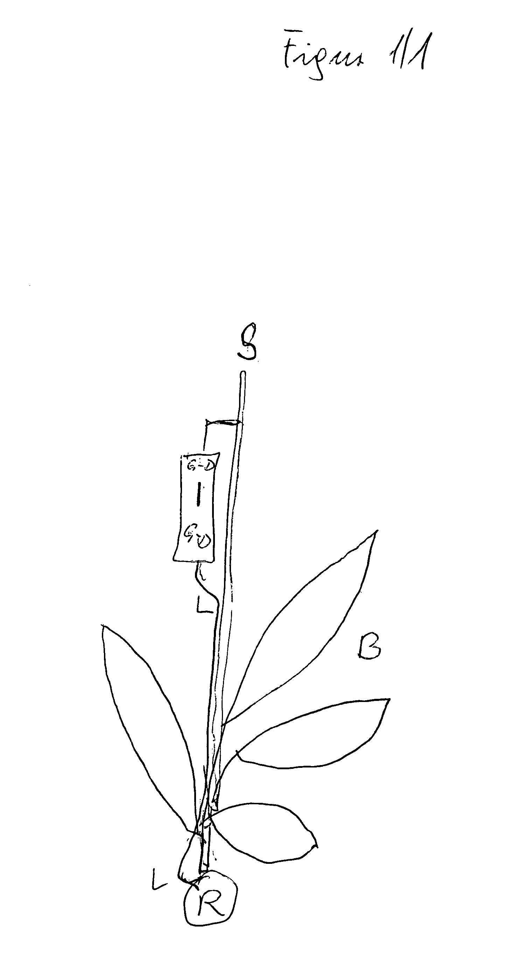

In der Zeichnung Fig 1/1 ist eine Vorrichtung gezeigt, bei dem das Rhizom R einer Bananenpflanze B über eine Leitung L mit einer Infiltrationsvorrichtung I, z.B. einem Tropfbeutel, oder einer Tropfflasche, die an einer Befestigungsvorrichtung S in geeigneter Höhe H über der Bananenpflanze angebracht ist, und die eine Lösung der erfindungsgemäß verwendbare Guanidinium-Derivate G-D enthält, verbunden ist.
Eine solche Vorrichtung hat sich zur Versorgung des Rhizom mit dem erfindungsgemäß verwendbaren Guanidinium-Derivat unter Anwendung des geeigneten Druckes als besonders geeignet erwiesen, wobei die erfindungsgemässen Effekte, nämlich Schutz vor dem Befall, oder Bekämpfung unerwünschter Mikroorganismen, z.B. Verhinderung oder Verminderung des Auftretens der Panama Krankheit, über einen langen Zeitraum gewährleistet werden konnten.

### Beispiel

### Anzucht

Bananenpflanzen der Foc-anfälligen Sorte ,Manzano' (*Musa* AAB), mit Hilfe der Gewebekultur bei der Firma Agribiotechnologia S.A., Alajuela, Costa Rica angezogen und als ungefähr 5 cm grosse Pflänzchen käuflich erworben, wurden in Plastiktöpfe (0.34L) mit Pflanzsubstrat (Floragard, Blumenerde, pH 5.9, Oldenburg, Deutschland) überführt. Nach 60 Tagen wurden die Pflanzen in grössere Töpfe (1.1L) umgepflanzt. Die Anzucht erfolgte im Gewächshaus bei Umgebungstemperatur (15°C - 27°C) und natürlichem tropischen Tag-Nachtrhytmus (San José, Costa Rica, 10° nördlicher Breite, 1075msm). Die Pflanzen wurden nach Bedarf mit Leitungswasser gegossen und einmal im Monat mit einem Blattdünger (Bayfolan Forte, Firma Bayer, Deutschland) gedüngt. Nach 90 Tagen waren die Pflanzen bereit für die Inokulation.

### Inokulum und Inokulation

Für den Versuch wurde das Foc-Isolat STGM 1 der Rasse 1, VCG 0120, aus Costa Rica verwendet (Inokulierung der Panama-Krankheit). Nach zweimaliger Überimpfung auf Kartoffel-Dextrose-Agar (Potato dextrose agar, PDA; Firma Oxoid, Basinstoke, England) in Petrischalen wurde der Pilz für die Inokulation benutzt (siehe z.B. Booth, C., 1977: Fusarium: Laboratory guide to the identification of the major species. Commonwealth Mycological Institute, Kew, UK. pp. 58. 1977). Die Petrischalen wurden in einem Inkubator bei 25°C in einem 12h/12h Tag-Nachtrhytmus 14 Tage lang inkubiert, bis sich ein gut sporulierender Pilzrasen gebildet hatte. Für die Inokulation wurden die Oberflächen der Pilzrasen mit einem Skalpell in destilliertem Wasser vorsichtig abgekratzt. Die sich daraus ergebende Suspension wurde durch eine doppelte Lage Gaze filtriert und auf 5x10⁵ Konidien / mL Wasser eingestellt (siehe auch Mak et al., ibidem).

Für die Inokulation wurden die 90 Tage alten Bananenpflanzen vorsichtig aus den Töpfen herausgenommen. Die Wurzelballen wurden mit einem Wasserstrahl von der anhaftenden Erde befreit und die Wurzeln wurden mit einem Messer auf eine Länge von 5-6cm zurückgeschnitten. Danach wurden sie eine Minute lang in die Konidiensuspension (5x10⁵ Konidien / mL Wasser) getaucht und anschliessend wieder in die Töpfe zurückgepflanzt.

Die Pflanzensymptome wurden nach dem Erscheinen der ersten Blattsymptome
(Blattsymptom-Index) wöchentlich evaluiert. Die Rhizomdaten (Rhizomverfärbungs-Index) wurden am Ende des Versuches erhoben (siehe auch Mak et al., ibidem).

### Testlösung

Die Testlösung bestand aus einer 3%igen Lösung einer 3:1-Mischung aus Poly-(hexamethylenguanidiniumchlorid) und Poly-[2-(2-ethoxy)-ethoxyethyl)-guanidiniumchlorid (Testlösung B) in Wasser.
Für die Pflanzenbehandlung wurde jeweils die 3%ige Stammlösung mit destilliertem Wasser auf 0.3% verdünnt. Die Aufbewahrung der Testslösung erfolgte bei Umgebungstemperatur (20-25°C).

### Behandlung

Die Testlösung oder destilliertes Wasser wurde mit Hilfe von Pasteur-Pipetten oder mit in der Human- oder Veterinärmedizin üblichen Einmalspritzen (5mL) mit Kanülen mit einem Durchmesser von 0.9 mm direkt in das Rhizom der Bananenpflanzen eingespritzt. Dabei wurden zuerst mit Hilfe einer Pasteur-Pipette oder einer Kanüle ungefähr 1.5 cm tiefe Löcher in die Rhizome (Durchmesser ungefähr 3cm) der Testpflanzen gebohrt und die Bohrkerne entfernt. Anschliessend wurden die Pipetten bzw. Kanülen, jeweils eine pro Pflanze, in die Bohrlöcher eingeführt. Danach wurden die Pipetten bzw. Spritzen mit 2 mL bzw. 5 mL Testlösung oder destilliertem Wasser (Kontrollpflanzen) gefüllt. Die Pipetten waren am oberen Ende offen, um den freien Fluss der Flüssigkeiten zu gewährleisten.

Mit den Spritzen wurde unter leichtem Druck 1 mL bis 2 mL der Testlösung oder destilliertes Wasser in die Rhizome gespritzt. Diese Behandlung fand einmal 1, 5 oder 12 Tage vor der Foc-Inokulation statt. Nach der Inokulation wurden alle Pipetten und Spritzen einen Tag nach der Inokulation und dann wöchentlich auf Verstopfungen kontrolliert. Gleichzeitig wurden die Rhizome noch einmal und danach im wöchentlichen Abstand gespritzt. Die Pasteur-Pipetten bzw. die Spritzen wurden zwischen dem Spritzen in den Rhizomen stecken gelassen und nach Bedarf wieder aufgefüllt.

Tabelle 1 zeigt Versuchsglieder eines Gewächshausversuches (Foc-Inokulationen nach 1, 5 und 12 Tagen mit einmaliger Vorbehandlung der Bananenpflanzen mit Testlösung oder destilliertem Wasser aus Spritzen oder Pasteurpipetten. n = 6 Pflanzen):

**Tabelle 1**

| **Versuchsglied** | **Behandlung** | | **Tage zwischen erster** |
|---|---|---|---|
| | **Pipette/Spritze** | **Füllung** | **Behandlung und Inokulation** |
| 1 | ohne | ohne | Keine Inokulation |
| 2 | ohne | ohne | Inokulation am Tag X |
| 3 | ohne | ohne | Inokulation am Tag X+7 |
| 4 | Pipette | Wasser | 1 |
| 5 | Pipette | Testlösung A oder B | 1 |
| 6 | Pipette | Testlösung A oder B | 5 |
| 7 | Pipette | Testlösung A oder B | 12 |
| 8 | Spritze | Wasser | 1 |
| 9 | Spritze | Testlösung A oder B | 1 |
| 10 | Spritze | Testlösung A oder B | 5 |
| 11 | Spritze | Testlösung A oder B | 12 |

### Evaluierung der Foc-Symptome

Die Pflanzensymptome (siehe z.B. Mak et al., ibidem) werden nach dem Erscheinen der ersten Blattsymptome (Blattsymptom-Index) wöchentlich evaluiert. Die Rhizomdaten (Rhizomverfärbungs-Index) werden am Ende des Versuches erhoben (siehe z.B. Mak et al., ibidem).
Die ersten Blattverfärbungen treten im allgemeinen nach etwa fünf Wochen auf und werden nach 5, 6, 7, 8 und 9 Wochen nach Inokulation (dpi) evaluiert. Die Rhizomsymptome werden einmal nach 9 Wochen evaluiert, wobei die Rhizome aufgeschnitten und die Pflanzen zerstört werden.

### Boniturskala für die Evaluierung der Blattsymptome (Blattsymptom-Index)

Für die Evaluierung der Blattsymptome wird die Skala nach Mak et al., ibidem, verwendet. Die Skala besteht aus fünf Bewertungsstufen:
Grad 1: Keine Vergilbung, die Pflanze erscheint gesund.
Grad 2: Schwache Streifenbildung und/oder Vergilbung der unteren Blätter.
Grad 3: Streifenbildung und/oder Vergilbung der meisten unteren Blätter.
Grad 4: Ausgedehnte Streifenbildung und/oder Vergilbung der meisten oder aller Blätter.
Grad 5: Die Pflanze ist abgestorben.

### Boniturskala für die Evaluierung der Rhizomsymptome (Rhizomverfärbungs-Index)

Für die Evaluierung der Rhizomsymptome wird die Skala nach Mak et al., ibidem, verwendet. Diese Skala besteht aus acht Bewertungsstufen:
Grad 1: Gesundes Rhizom, keine Verfärbung.
Grad 2: Keine Verfärbung des Gefässsystems des Rhizoms;
Verfärbung an der Übergangsstelle zwischen Wurzeln und Rhizom.
Grad 3: Spur einer Verfärbung bis 5% des Gefässsystems verfärbt.
Grad 4: 6-20% des Gefässsystems verfärbt.
Grad 5: 21-50% des Gefässsystems verfärbt.
Grad 6: Mehr als 50% des Gefässsystems verfärbt.
Grad 7: Verfärbung des gesamten Rhizom-Gefässsystems.
Grad 8: Die Pflanze ist abgestorben.

### Resultate

Tabelle 2 zeigt die Ergebnisse des Infektionsverlaufes der Panama-Krankheit in den Blättern der anfälligen Bananensorte ,Manzano' (*Musa* AAB) mit und ohne die Einwirkung von Testlösung B im Gewächshaus, San José, Costa Rica. Testlösung B oder destilliertes Wasser wurde in das Rhizom der Pflanzen mit Hilfe von Pasteur-Pipetten oder klinischen Spritzen einmal 1, 5 oder 12 Tage vor der Foc-Inokulation und danach wöchentlich eingespritzt. Die Pasteur-Pipetten bzw. die Spritzen wurden zwischen dem Spritzen in den Rhizomen stecken gelassen und nach Bedarf wieder aufgefüllt (n = 6 Pflanzen).

**Tabelle 2**

| **Versuchsglied** | **Behandlung** | | **TAGE zwischen Behandlung und Inokulation** | **Wochen nach Inokulation** | | | | |
|---|---|---|---|---|---|---|---|---|
| | **Pipette/ Spritze** | **Füllung** | | 5 | 6 | 7 | 8 | 9 |
| 1 | ohne | ohne | Null-Kontrolle | 1* | 1 | 1 | 1 | 1 |
| 2 | ohne | ohne | Inokulum 1 | 2 | 2.4 | 2.7 | 3.3 | 3.3 |
| 3 | ohne | ohne | Inokulum 2 | 1.9 | 2.5 | 2.7 | 2.8 | 3.7 |
| 4 | Pipette | Wasser | 1 | 2.3 | 2.4 | 2.5 | 3 | 3.7 |
| 5 | Pipette | Testlösung B | 1 | 2 | 2.4 | 2.7 | 2.8 | 3 |
| 6 | Pipette | Testlösung B | 5 | 2 | 2.3 | 3.5 | 3.5 | 3.5 |
| 7 | Pipette | Testlösung B | 12 | 2.1 | 2.5 | 2.7 | 2.8 | 3 |
| 8 | Spritze | Wasser | 1 | 2.2 | 2.8 | 3.4 | 3.4 | 4 |
| 9 | Spritze | Testlösung B | 1 | 1.5 | 1.7 | 1.8 | 2.2 | 2.2 |
| 10 | Spritze | Testlösung B | 5 | 1.8 | 2.2 | 2.5 | 2.8 | 2.8 |
| 11 | Spritze | Testlösung B | 12 | 1.8 | 2.3 | 2.8 | 2.8 | 3 |

| | | | | | | | | |
|---|---|---|---|---|---|---|---|---|
| ^{*} Boniturskala Blattsymptom-Index von Grad 1 bis 5 | | | | | | | | |

Tabelle 3 zeigt zeigt die Rhizomverfärbung verursacht durch die Panama-Krankheit der anfälligen Bananensorte ,Manzano' (*Musa* AAB) mit und ohne die Einwirkung von Testlösung B im Gewächshaus, San José, Costa Rica. Testlösung B oder destilliertes Wasser wurde in das Rhizom der Pflanzen mit Hilfe von Pasteur-Pipetten oder klinischen Spritzen einmal 1, 5 oder 12 Tage vor der Foc-Inokulation und danach wöchentlich eingespritzt. Die Pasteur-Pipetten bzw. die Spritzen wurden zwischen dem Spritzen in den Rhizomen stecken gelassen und nach Bedarf wieder aufgefüllt (n = 6 Pflanzen). Die Daten wurden 9 Wochen nach der Inokulation erhoben.

**Tabelle 3**

| **Versuchs-** **glied** | **Behandlung** | | **Tage zwischen erster Behandlung und Inokulation** | **Rhizom- symptome** |
|---|---|---|---|---|
| | **Pipette/Spritze** | **Füllung** | | |
| 1 | ohne | ohne | Null-Kontrolle | 1* |
| 2 | ohne | ohne | Kontrolle 1 | 4.5 |
| 3 | ohne | ohne | Kontrolle 2 | keine Daten** |
| 4 | Pipette | Wasser | 1 | 4.7 |
| 5 | Pipette | Testlösung B | 1 | 4.2 |
| 6 | Pipette | Testlösung B | 5 | 4.5 |
| 7 | Pipette | Testlösung B | 12 | 4.7 |
| 8 | Spritze | Wasser | 1 | 6 |
| 9 | Spritze | Testlösung B | 1 | 2.5 |
| 10 | Spritze | Testlösung B | 5 | 3.2 |
| 11 | Spritze | Testlösung B | 12 | 3.3 |

| | | | | |
|---|---|---|---|---|
| *Boniturskala Rhizomverfärbungsmindex von Grad 1 - 8 ** Die Pflanzen wurden für andere Versuchszwecke verwendet | | | | |

Sehr ähnliche Resultate werden mit einer Testlösung bestehend aus einer 3%igen Lösung einer 3:1-Mischung aus Poly-(hexamethylenguanidinium-hydroxid) und Poly-[2-(2-ethoxy-ethoxyethyl)-guanidinium-hydroxid] (Testlösung A) erzielt.

## Patentansprüche

1. Verfahren zur Bekämpfung unerwünschter Mikroorganismen an Bananenpflanzen oder Verfahren zum Schutz von Bananenpflanzen gegen den Befall durch unerwünschte Mikroorganismen, **dadurch gekennzeichnet, dass** in das Gefäßsystem einer Bananenpflanze polymere Guanidinium-Derivate auf Basis eines Diamins unter Anwendung eines Druckes eingebracht werden, wobei das Diamin Oxyalkylenketten und/oder Alkylengruppen zwischen zwei Aminogruppen enthält und wobei das Guanidinium-Derivat durch Polykondensation eines Guanidin-Säureadditionssalzes mit dem Diamin erhältlich ist, wobei ein Polykondensationsprodukt in Salzform erhalten wird, welches gegebenenfalls anschließend in die Hydroxidform überführt wird.

2. Verwendung von polymeren Guanidinium-Derivaten auf Basis eines Diamins zum Einbringen in das Gefäßsystem von Bananenpflanzen unter Anwendung eines Druckes zur Bekämpfung unerwünschter Mikroorganismen an Bananenpflanzen, oder gegen den Befall durch unerwünschte Mikroorganismen, wobei das Diamin Oxyalkylenketten und/oder Alkylengruppen zwischen zwei Aminogruppen enthält und wobei das Guanidinium-Derivat durch Polykondensation eines Guanidin-Säureadditionssalzes mit dem Diamin erhältlich ist, wobei ein Polykondensationsprodukt in Salzform erhalten wird, welches gegebenenfalls anschließend, in die Hydroxidform überführt wird.

3. Verfahren nach Anspruch 1, oder Verwendung nach Anspruch 2, **dadurch gekennzeichnet, dass** die polymeren Guanidinium-Derivate über das Rhizom, den Stamm oder über die Wurzel der Bananenpflanze in ihr Gefäßsystem eingebracht werden.

4. Verfahren nach Anspruch 1 oder Anspruch 3, oder Verwendung nach Anspruch 2 oder Anspruch 3, **dadurch gekennzeichnet, dass** das polymere Guanidinium-Derivat ein Guanidinium-Hydroxid ist.

5. Verfahren oder Verwendung nach einem der Ansprüche 1 bis 4, **dadurch gekennzeichnet, dass** das polymere Guanidinium-Hydroxid Poly-[2-(2-ethoxy-ethoxyethyl)-guanidinium-hydroxid] mit mindestens 3 Guanidiniumresten ist.

6. Verfahren oder Verwendung nach einem der Ansprüche 1 bis 5, **dadurch gekennzeichnet, dass** das Polykondensationsprodukt in Salzform erhältlich ist durch Polykondensation eines Guanidin-Säureadditionssalzes mit einem Alkylendiamin und einem Oxyalkylendiamin im Molverhältnis zwischen 4:1 und 1:4
(Alkylendiamin/Oxyalkylendiamin).

7. Verfahren oder Verwendung nach einem der Ansprüche 1 bis 6, **dadurch gekennzeichnet, dass** als Diamin ein Alkylendiamin der allgemeinen Formel
H₂N-(CH₂)ₙ-NH₂
vorgesehen ist, in welcher n eine ganze Zahl zwischen 2 und 10, insbesondere 6, ist.

8. Verfahren oder Verwendung nach einem der Ansprüche 1 bis 7, **dadurch gekennzeichnet, dass** als Oxyalkylendiamin eine Verbindung der allgemeinen Formel
H₂N-(CH₂)₂O)]ₘ-(CH₂)₂-NH₂
vorgesehen ist, in welcher m eine ganze Zahl zwischen 2 und 5, insbesondere 2, ist.

9. Verfahren oder Verwendung nach einem der Ansprüche 1 bis 8, **dadurch gekennzeichnet, dass** die mittlere Molekularmasse des polymeren Guanidinium-Hydroxids im Bereich 500 bis 3.000 liegt.

10. Verfahren oder Verwendung nach einem der Ansprüche 1 bis 9, **dadurch gekennzeichnet, dass** unerwünschte Mikroorganismen Pilze sind, die die Fusarium-Welke der Banane hervorrufen können.
